# EUROPEAN PATENT SPECIFICATION

(11) **EP 0 696 560 B1**
(45) Date of publication and mention of the grant of the patent: **19.01.2000**
(21) Application number: 95112437.9
(22) Date of filing: 08.08.1995
(51) Int. Cl.: C04B 35/20, B09B 3/00

(54) **Process for preparing ceramic materials starting from asbestos wastes and the so obtained ceramic materials**
Verfahren zur Herstellung von keramischen Materialien, ausgehend von Asbestosmüll, sowie so hergestellte Materialien
Procédé pour la préparation de matériaux céramiques à partir de déchets d'amiante, et matériau ainsi obtenus

(30) Priority: 10.08.1994 IT FI940157
(43) Date of publication of application: 14.02.1996
(73) Proprietor: CONSIGLIO NAZIONALE DELLE RICERCHE, 00185 Roma (IT)
(72) Inventor: Marabini, Anna Maria, I-00044 Frascati (IT); Plescia, Paolo, I-00128 Roma (IT); Maccari, Dante, I-00157 Roma (IT)
(74) Representative: Gervasi, Gemma, Dr.

(56) References cited:
- EP-A- 0 344 563
- CA-A- 1 197 268
- DE-A- 4 312 102
- 'KIRK-OTHMER ENCYCLOPEDIA OF CHEMICAL TECHNOLOGY, VOLUME 3' 1978 , WILEY , NEW YORK * page 272, line 1, paragraph 1 - line 5, paragraph 3 *
- I.J.MCCOLM 'CERAMIC SCIENCE FOR MATERIALS TECHNOLOGISTS' 1983 , LEONARD HILL , GLASGOW * page 57, line 1, paragraph 3 - line 5 *

## Description

### 1. Field of the invention

The present invention refers to a process which allows the preparation of ceramic materials having particular properties starting from asbestos wastes and to the so obtained ceramic materials.

### 2. State of the art and summery of the invention

It is defined as amianthus or asbestos any mineral which, when suitably processed, gives fibers which can be spun and are heat-resistant. This definition applies principally to six different minerals: chrysotile and five amphiboles: crocidolite, amosite, anthophyllite, tremolite and actinolite (the first two are trivial names which refer respectively to the mixture of amphiboles riebekite-glaucophane and of cummingtonite and grunerite).

Chrysotile is by far the most used asbestos in the world: by itself it represents 93% of the whole asbestos used.

Asbestos is used as main component in at least 3000 different products (for example asbestos cement, asbestos cardboard, insulating materials, brakes, clutches, fabrics) and, as secundary component, in many others (for example talcs).

Asbestos wastes must be discharged in special dumping grounds for toxic and noxious materials with very high storage costs not to speak of the environmental problems involved. It is therefore clear that it would be extremely interesting to recycle such wastes eliminating (or at least dramatically reducing) the problems involved with their dumping.

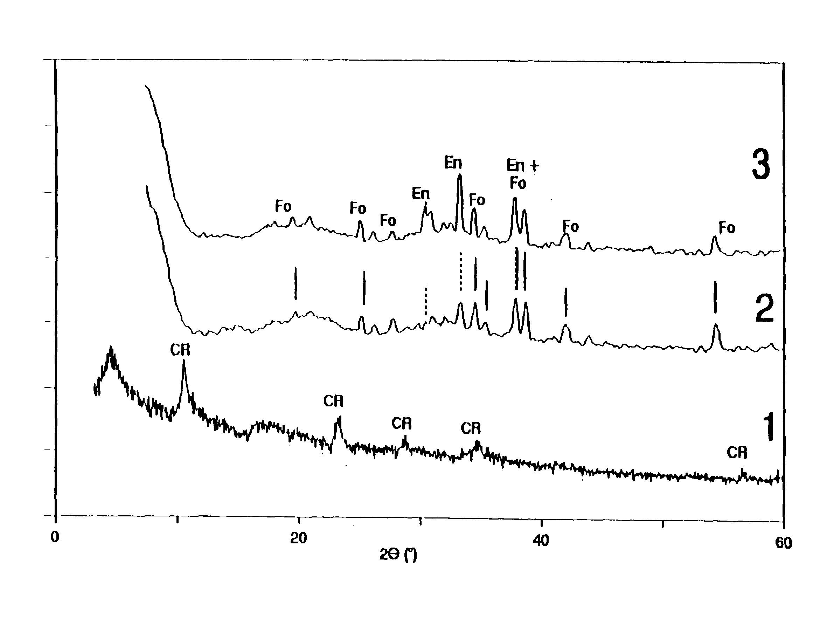

### 3. Description of the figure

The enclosed figure represents the XRD spectra of the starting material and of the final compounds obtained using a Siemens D-500 diffractometer, Cu-ka radiation, 35 kV, 40 mA in particular:
1 - Spectrum of the starting material ground to particles having a diameter up to 25 µm
2 - Spectrum of a sample obtained by compression of the starting material at 7 ton/m² and roasted at 1000°C for 2 hours
3 - Spectrum of the same sample roasted again at 900°C for 14 hours
   In the figure the following symbols are used:
   Fo = forsterite - olivine
   En = enstatitic pyroxene
   CR = chrysotile
4. Detailed description of the invention

It was now found, and it is an object of the present application, that it is possible to use wastes containing asbestos in a suitable process for the preparation of ceramic materials which have technological interest.

The starting materials, (consisting of wastes containing asbestos) suitably prepared and by controlling temperature and crystallization time, are transformed in products having well defined physical and mineralogical properties.

Among the wastes containing asbestos which can be used in the present process, the following can be considered as suitable examples: asbestos cardboard panels, soundproof asbestos panels, fiber-cement panels, spray-applied asbestos materials, materials for brakes and clutches, asbestos fabrics.

The wastes are firstly ground; in order to prevent the dispersion of fibers during the grinding it is necessary to grind the wastes in a moist environment in the presence of water.

According to the desired final ceramic materials, the slurry after grinding is immediately roasted or is poured in moulds and pressed in the desired forms. After a first roasting phase annealing can be carried out.

The dimension of the particles is important for the asbestos transformation speed into the desired ceramic material; generally it is processed so that particles of 0.1 - 150 µm, preferably smaller than 25 µm, may be obtained.

The possible moulding is carried out applying a pressure of 200 - 7000 Kg/cm².

The pressure applied acts on the particle cohesion and therefore on the porosity and density of the final product. If the final product must be very porous, and therefore have a low specific weight, low pressures are preferably applied (200 - 400 kg/cm²); on the contrary when an heavy poorly porous material is desired, higher pressures are applied (1000 - 7000 Kg/cm²). If iron is present in the treated wastes, the melting temperature of the obtained ceramic material will be lowered; this can be avoided by adding carbon to the starting mixture in order to reduce the iron present in the starting material to magnetite.

Also the possible presence of sulphur in the starting material can produce unwanted effects; the inorganic sulphur can be eliminated by several washings to be performed before the roasting step while bonded sulphur can be eliminated according to processes known in the art.

The roasting step is carried out at a temperature of 700° - 1100°C (preferably 950°C) using muffle furnaces, preferably cylindrical in order to allow a flow process.

The roasting temperature must be higher than 650°C and lower than 1300°C (at this temperature the components spontaneously synthesize and melt).

The possible annealing is carried out in similar ovens at a temperature of 200°-300°C lower than the first one; the annealing time is usually 1 - 6 h, however it has been noted that a longer period (up to 14 h) does not substantially modify the obtained product (see figure).

The tests and the X-rays diffraction analysis carried out on the obtained samples show that the roasting treatment at the indicated temperatures causes the transformation of ground chrysotile into forsterite and silica according to the following reaction:

2(3MgO.2SiO₂) → 3(2MgO.SiO₂) + SiO₂

moreover the following reaction between forsterite and silica takes place:

2MgO.SiO₂ + SiO₂ → 2 (MgO.SiO₂)

with the immediate formation of enstatite.

The roasting process involves therefore the dehydroxylation of chrysotile and its transformation into forsterite and, indirectly, into enstatite, allowing to obtain a product with high porosity and high softening temperature: according to these characteristics the product can be identified as a ceramic. By operating as above reported, the forsterite crystals grow oriented along the elongation direction of the chrysotile crystals.

This characteristic is increased by the action of pressure on the materials which are previously moulded.

The SEM (scanning electron microscope) analysis shows a highly massive structure of the material even after thermic treatment. The preventive compression of the material (in the moulding step) produces a tendency to cleavage along parallel planes which is maintained also after the roasting and the following recrystallization of the melted material, this is in accord with a iso-orientation of the formed forsterite and enstatite crystals.

Such tendency to cleavage is not present if the slurry obtained from the grinding step is roasted and thereafter compressed.

The so obtained material shows marked mechanical anisotropies. The compression gives to the obtained material a mechanical anisotropy perpendicularly to the crystals orientation while the same material, when not compressed, shows random orientation.

The annealling time is 1 - 5 hours. An interesting characteristic is given by the possibility of directing the quality of the final material by modifying the crystallization time; it is possible, by varying the crystallization time after annealing, to modify the enstatite percentage.

The obtained ceramic having a high percentage of enstatite can be used as dielectric having a very low power factor and a dielectric strength higher than 15 kV/cm or as insulators and supports for high temperature.

Ceramics having an high percentage of forsterite are normally applied in micro-waves circuits and in particular applications where high thermic expansion coefficients are required in order to cope with those of various metals. Considering the studies and search of new materials in the field of ceramic, the use of the asbestos waste is an economic and important alternative to the traditional materials.

### 4. Description of the figure

The enclosed figure represents the XRD spectra of the starting material and of the final compounds obtained using a Siemens D-500 diffractometer, Cu-ka radiation, 35 kV, 40 mA in particular:
1 - Spectrum of the starting material ground to particles having a diameter up to 25 µm
2 - Spectrum of the sample obtained by compression of the starting material at 7 ton/m² and roasted at 1000°C for 2 hours
3 - Spectrum of the same sample roasted again at 900°C for 14 hours

In the figure the following symbols are used:
Fo = forsterite - olivine
En = enstatitic pyroxene
CR = chrysotile

### Example

The starting material is an asbestos-cardboard panel wherein the chrysotile percentage is higher than 60% and the rest is made of organic fibers and glueing materials.

The waste sample (100 gr) is broken into small pieces in a jar mill and ground in a ball mill in the presence of water (10% by weight).

The grinding is carried out for 120 seconds giving particles having granulometry D₈₀ = 20.62 µm.

The slurry is dried until a reduction of 20% of its weight is obtained and compressed at 350 kg/cm²; therafter the material is roasted at 1000°C for 2 hours and annealled at 900°C for 6 hours.

Final density and porosity of the obtained material are:
d = 3.192 g/cm³
n = 6.9%

The final material presents a light-gray-green colour and a typical lamellar subdivison.

At the electronic microscope inspection the structure appears formed by crystalline phases alligned to form pseudo-fibers of olivine and clinoenstatite.

## Claims

1. Process for the preparation of ceramic materials using wastes containing asbestos wherein:
wastes containing asbestos are ground in the presence of water up to a particle dimensions of 0.1-150 µm, and so obtained slurry is compressed at 200-7000 kg/cm², then roasted at a temperature of 700°-1100°C and subsequently annealed at a temperature 200-300°C or 100°C lower than the roasting temperature, for a time of 1-6 h.

2. Process according to claim 1 wherein the particle dimensions are lower than 25 µm.

3. Ceramic products obtained according to the process of claim 1 having marked mechanical anisotropy.

4. Ceramic products obtained according to the process of claim 1 having dielectric strength of at least 15 KV/cm.

## Patentansprüche

1. Verfahren zur Herstellung von Keramikmaterialien unter Verwendung von Asbest enthaltenden Abfällen, bei dem
Asbest enthaltende Abfälle in Gegenwart von Wasser bis auf Teilchendimensionen von 0,1 bis 150 µm gemahlen werden und die dabei erhaltene Aufschlämmung bei 200 bis 7000 kg/cm² gepreßt, danach bei einer Temperatur von 700 bis 1100°C geröstet und anschließend 1 bis 6 h lang bei einer Temperatur, die um 200 bis 300°C oder um 100°C niedriger ist als die Rösttemperatur, geglüht wird.

2. Verfahren nach Anspruch 1, bei dem die Teilchendimensionen weniger als 25 µm betragen.

3. Keramikprodukte, wie sie nach dem Verfahren gemäß Anspruch 1 erhalten werden, die eine ausgeprägte mechanische Anisotropie aufweisen.

4. Keramikprodukte, wie sie nach dem Verfahren gemäß Anspruch 1 erhalten werden, die eine Durchschlagsfestigkeit von mindestens 15 kV/cm aufweisen.

## Revendications

1. Procédé de préparation de matériaux céramiques utilisant des déchets contenant de l'amiante, dans lequel les déchets contenant de l'amiante sont broyés en présence d'eau jusqu'à une taille de particules comprise entre 0,1 et 150 µm et dans lequel la bouillie ainsi obtenue est comprimée entre 200 et 7000 kg/cm², puis grillée à une température comprise entre 700 et 1100°C et ensuite recuite à une température de 200 à 300°C ou 100°C inférieure à la température de grillage, pendant une durée de 1 à 6 heures.

2. Procédé selon la revendication 1, dans lequel la taille des particules est inférieure à 25 µm.

3. Produits céramiques obtenus par le procédé selon la revendication 1, présentant une anisotropie mécanique marquée.

4. Produits céramiques obtenus par le procédé selon la revendication 1, ayant une constante diélectrique d'au moins 15 kV/cm.
